# DEMANDE DE BREVET EUROPEEN

(11) **EP 2 380 447 A1**
(43) Date de publication de la demande: **26.10.2011**
(21) Numéro de dépôt: 11305487.8
(22) Date de dépôt: 26.04.2011
(51) Int. Cl.: A23K 1/00, A23K 1/18, A23L 1/32

(54) **Composition à base d'oeufs et son utilisation pour l'alimentation des insectes**

(30) Priorité: 26.04.2010 FR 1053172
(71) Demandeur: Universite Paul Sabatier Toulouse III, 31062 Tolouse Cedex 9 (FR)
(72) Inventeur: Cazalbou, Sophie, 31000, TOULOUSE (FR); Cavalie, Sandrine, 82000, MONTAUBAN (FR); Ruffel, Arnaud, 31400, TOULOUSE (FR)
(74) Mandataire: Blot, Philippe Robert Emile

(57) **Abrégé**

La présente invention concerne une composition à base d'oeufs sous forme de granulés et son utilisation à titre de nourriture artificielle pour insectes.

## Description

La présente invention concerne l'alimentation artificielle d'insectes d'élevage, notamment dans le cadre de la lutte biologique.

La lutte biologique consiste à protéger les plantes cultivées au moyen d'organismes vivants. En Europe, les pucerons sont les principaux ravageurs des plantes cultivées. Dans ce cadre, de nombreuses espèces, prédateurs ou parasites sont élevées à titre d'auxiliaires pour détruire des insectes cibles, ravageurs, gênants ou vecteurs de maladies. Les individus peuvent être simplement prélevés dans un lieu puis relâchés là où sévit un lot indésirable, ou élevés et multipliés à chaque saison. En particulier, les coccinellidés *(Coccinellidae)* est une famille d'insectes de l'ordre des coléoptères très utilisés en tant qu'auxiliaires contre les pucerons et les cochenilles en remplacement des produits phytosanitaires. Les coccinelles, adultes et larves, sont ainsi utilisées à grande échelle à titre de prédateurs. Les trichogrammes sont également utilisés à titre de parasites de la pyrale pour lutter contre ce ravageur du maïs. A titre d'auxiliaires prédateurs, on peut également citer les syrphes (larves) et les chrysopes (larves), et à titre d'auxiliaires parasites, certaines guêpes qui pondent leurs oeufs dans le corps même des pucerons.

Dans cet objectif, une production en masse de ces insectes auxiliaires est nécessaire, nécessitant un élevage de leurs proies avec des coûts associés importants. Ainsi, il est estimé que dans 90% du prix de revient d'une coccinelle correspond au coût associé à son alimentation qui nécessite l'élevage de pucerons.

C'est dans le but de substituer les pucerons à l'alimentation des coccinelles que Schanderl (Schanderl, Thèse de doctorat 3e cycle, université de droit, d'économie et des sciences d'Aix-Marseille, 1987) met au point en 1987 une nouvelle technique d'élevage en utilisant les oeufs de la teigne de la farine : *Ephestia kuehniella.* En 1994, l'INRA arrive à produire industriellement des coccinelles *H. axyridis* élevée à l'aide de cette alimentation de substitution (Brun, Arboriculture Fruitière, 478, 17-19, 1994). Mais cette nourriture reste extrêmement coûteuse.

Il est donc indispensable de mettre à disposition une nouvelle alimentation artificielle, moins onéreuse et d'utilisation plus aisée qui permettrait un élevage en masse des prédateurs entomophages, comme par exemple, les coccinelles...

Il est reconnu que les coccinelles ont des préférences alimentaires marquées, de sorte que la mise au point d'un aliment de substitution doit répondre à des critères complexes.

Ainsi, Dong et al., Southwestern Entomologist 26(3), 205-213, 2001, ont expérimenté plusieurs nourritures artificielles, dont une à base d'oeufs entiers ou de jaunes d'oeufs. Il a notamment été mis en évidence que cette alimentation artificielle aboutissait à une ponte significativement inférieure à celle résultant de l'alimentation habituelle. Ces résultats ont été récemment confirmés par Bonte et al. (« Development and reproduction of Adalia bipunctata on factitious and artificial foods », Biocontrol, publié en ligne le 3 février 2010) qui ont expérimenté diverses alimentations de coccinelles d'élevage, essentiellement basées sur des oeufs de lépidoptères, pucerons, pollens, kystes de crustacées ainsi qu'une nourriture artificielle lyophilisée constituée de viande et foie de boeuf, jaune d'oeuf et sucrose ; les auteurs ont ainsi mis en évidence que la nourriture artificielle seule aboutissait à des résultats peu satisfaisants en termes de survie, développement, poids, reproduction et longévité des coccinelles ainsi nourries.

De plus, des problèmes d'humidité semblent constituer une des faiblesses majeures des alimentations jusqu'alors élaborées. En effet, les deux configurations classiquement rencontrées sont : soit un problème de dessèchement de la nourriture artificielle qui induit un refus d'alimentation des larves et coccinelles, soit une mortalité extrêmement élevée due à un engluement des espèces dans la nourriture trop collante. Par ailleurs, l'alimentation devra contenir les nutriments adéquats mais doit aussi être acceptée par l'insecte. D'après Moore (Moore R.F., Handbook of insect rearing, editions S.P.M.R.F., vol 1, 67-83, 1985), l'insecte doit dans un premier temps être attiré par l'aliment et l'utilisation de composés volatiles peut favoriser cette première étape. Une fois repéré, l'insecte contrôle ensuite l'aliment par palpation et suivant l'information perçue par les palpes labiaux et maxillaires, elle est ensuite goûtée (l'ajout de composés appétant peut modifier cette phase). Si l'insecte accepte la nourriture, l'ingestion a lieu tant que l'état d'excitation de l'insecte est maintenu (l'ajout de composés phagostimulants peut influencer cette phase).

Il est donc désirable de mettre à disposition de nouvelles compositions de nourriture artificielle améliorée facilement réalisable, à faible coût, répondant aux exigences nutritionnelles et d'acceptance des insectes, permettant une production de masse d'insectes d'élevage.

Ainsi, selon un premier objet, la présente invention concerne une composition sous forme de granulés constitués de :
- oeufs et/ou dérivés,
- sucre(s).

Notamment, les compositions selon l'invention sont adaptées à l'alimentaion d'insectes d'élevage.

L'expression « oeufs et/ou dérivés » utilisée ici fait référence aux oeufs de volaille, ainsi que leurs extraits, entiers ou reconstitués. Ainsi, on peut notamment citer l'oeuf de poule entier, son jaune, son blanc et/ou leur poudre, notamment commercialisée par ABCD ou OVIPAC, éventuellement reconstituée au moyen d'eau.

A tire de sucre, on peut notamment citer le sucrose, saccharose, glucose, fructose, sucrose, tréhalose, maltose et mannose, et plus particulièrement le saccharose.

Lesdits granulés peuvent également comprendre d'autres ingrédients tels que :
- de l'eau ;
- un ou plusieurs agents permettant de polymériser les oeufs et/ou dérivés, tel que par exemple un acide notamment l'acide acétique ;
- un ou plusieurs agents conservateurs tels que l'acide sorbique, ascorbique ;
- un ou plusieurs agents gélifiants,
- une ou plusieurs molécules de reconnaissance de la nourriture ;
- un ou plusieurs agents susceptibles d'améliorer la formulation, tel que par exemple la cellulose ; et/ou
- un ou plusieurs agents nutritifs tel que le miel, des extraits de levure, etc.

Selon un mode de réalisation particulier, les granulés selon l'invention présentent un taux d'humidité supérieur ou égal à 30%, généralement supérieur ou égal à 40%.

Les granulés selon l'invention ont avantageusement un diamètre moyen compris entre 0,2 mm et 1 cm, de préférence entre 0,2 et 1,5 mm, et plus préférentiellement entre 0,3 mm et 0,7 mm de diamètre.

Selon un mode de réalisation particulier, les compositions selon l'invention peuvent également comprendre d'autres additifs pour administration simultanée, séquencée ou étalée dans le temps avec lesdits granulés.

Ainsi, selon un mode de réalisation particulier, les compositions comprennent outre les granulés précités, des granulés comprenant un polymère super absorbant (SAP).

Les polymères super absorbants sont des polymères de polyacrylate de sodium qui forment un gel au contact de l'eau. Ils peuvent ainsi absorber jusqu'à 100 ou 1000 fois leur poids en eau.

Les granulés à base de SAP contiennent selon un mode particulier : de 0,5% à 20% en poids de SAP et 80% à 99,5% en poids d'eau.

Lesdits granulés à base de SAP peuvent également contenir d'autres ingrédients, notamment nutritifs, tels qu'un ou plusieurs sucres, notamment choisis parmi les sucres précités.

Lesdits granulés à base de SAP permettent d'apporter dans une unique composition l'eau, nécessaire à l'alimentation des insectes d'élevage.

Les deux types de granulés peuvent être ainsi administrés de façon simultanée au sein d'une unique composition de mélange, ou peuvent être présentés sous forme de kit pour une administration séquencée ou étalée dans le temps.

Dans le cadre des compositions selon l'invention comprenant les deux types de granulés, le rapport (granulés à base d'oeufs et/ou dérivés) / (granulés à base de SAP) est généralement compris entre 0,5 et 1,5 préférentiellement entre 0,8 et 1,2 (en poids).

Les compositions comprenant les granulés à base d'oeufs et/ou dérivés comprennent généralement :
- de 50% à 95% en poids d'oeufs et/ou dérivés reconstitué ;
- de 5% à 50% de sucre,
   et éventuellement, en outre :
- de 5 à 20% d'eau ;
- de 0,5% à 10% d'extrait de levure ;
- de 2% à 15% de miel;
- de 2% à 10% de cellulose ;
- de 0,1% à 1,5% d'agent conservateur ; et
- de 0,1% à 5% d'agent polymérisant,
   le cas échéant.

Les compositions selon l'invention peuvent également comprendre des éléments chimiques (ions, molécules, principes actifs...) ou biologiques.

Selon un autre objet, la présente invention concerne également le procédé de préparation des compositions comprenant lesdits granulés à base d'oeufs et/ou dérivés. Le procédé selon l'invention comprend ainsi les étapes de :
- mélange des différents ingrédients ;
- cuisson du mélange ainsi obtenu ; et
- granulation.

Ledit procédé peut également comprendre l'étape ultérieure de séchage desdits granulés ainsi obtenus.

Les étapes de mélange, cuisson et granulation peuvent être réalisées par toute méthode connue en soi.

Le mélange peut ainsi être effectué par agitation dans un réacteur.

Généralement, la cuisson peut être effectuée par des méthodes habituelles (enceinte thermostatée (four ou étuve), chauffage dans un réacteur (tel que casserole, poêle ou tout autre récipient)), et peut être plus avantageusement réalisée par chauffage aux micro-ondes.

La granulation a pour but de découper ou morceler la préparation cuite selon la taille désirée. Elle peut être typiquement réalisée dans un granulateur, au moyen d'une grille calibrée selon le diamètre désiré des granulés. Différents granulateurs, notamment à pales ou extrudeurs en filet, sont disponibles et peuvent être utilisés selon la forme, taille et consistance désirée pour les granulés.

Selon un autre objet, la présente invention concerne également l'utilisation des compositions selon l'invention pour l'alimentation des insectes d'élevage.

A titre d'insectes d'élevage, on peut notamment citer les coccinelles (*coccinellidae*) et leurs différentes espèces, telles que notamment les espèces d'élevage aphidiphages telles que *Adalia bipunctata, Harmonia axyridis,* coccidiphages ou acariphages, et/ou tout autre insecte d'élevage tel que les syrphes (Diptère, Syrphidae), chrysopes (Névroptère, Chrysopidae) ou punaises prédatrices (Hémiptères), ou ver à soie (Lépidoptère).

Les exemples suivants sont donnés à titre illustratif et non limitatif de la présente invention

### Exemple 1 : Granulés obtenus à base d'oeufs entiers liquides

Préparation de granulés obtenus à partir d'une préparation constituée de:
- 450 g d'oeufs entiers liquides
- 82,5 g de saccharose
- 15 g d'extrait de levure
- 37,5 g de miel
- 15 ml d'acide acétique à 10%
- 80 ml d'eau
- 1,2 g d'acide sorbique
- 24 g de cellulose microcristalline.

Les oeufs entiers sont introduits dans la cuve fixe d'un mélangeur planétaire puis agités durant quelques minutes (1 à 5 minutes). On ajoute ensuite sous agitation le reste des constituants puis on maintient l'agitation encore durant quelques minutes.

Une fois le mélange effectué, la préparation est répartie dans trois récipients puis placée au four micro-onde durant 7 minutes à une puissance de 500 W.

Immédiatement après la cuisson, la préparation cuite est introduite dans un granulateur oscillant équipé d'une grille métallique avec un diamètre de trou de 1 mm et diamètre de fil de 0,32 mm.

Le séchage de cette préparation n'étant pas nécessaire, les granulés obtenus sont directement conditionnés dans un récipient fermé puis éventuellement congelés pour une utilisation ultérieure.

Le taux d'humidité mesuré par infrarouges sur cette préparation est supérieur à 46%.

### Exemple 2 : Granulés obtenus à base d'oeufs entiers en poudre

Préparation de granulés obtenus à partir d'une préparation constituée de:
- 117 g de poudre d'oeuf entier
- 82,5 g de saccharose
- 15 g d'extrait de levure
- 37,5 g de miel
- 15 ml d'acide acétique à 10%
- 330 ml d'eau
- 1,2 g d'acide sorbique
- 35 g de cellulose microcristalline.

La poudre d'oeuf et une partie de l'eau sont introduits dans un premier temps dans la cuve fixe d'un mélangeur planétaire puis mélangés durant 1 minute environ. Le reste de l'eau est ajouté et l'agitation est maintenue durant plusieurs minutes (1 à 5 minutes) jusqu'à hydratation complète de la poudre.

On ajoute ensuite sous agitation le reste des constituants puis on maintient l'agitation encore durant quelques minutes.

Une fois le mélange effectué, la préparation est répartie dans trois récipients puis placée au four micro-onde durant 8 minutes à une puissance de 500 W.

Immédiatement après la cuisson, la préparation cuite est introduite dans un granulateur oscillant équipé d'une grille métallique avec un diamètre de trou de 1,5 mm et diamètre de fil de 0,32mm.

Le séchage de cette préparation n'étant pas nécessaire, les granulés obtenus sont directement conditionnés dans un récipient fermé puis éventuellement congelés pour une utilisation ultérieure.

Le taux d'humidité mesuré par infrarouges sur cette préparation est supérieur à 46%.

### Exemple 3 : Mélange constitué de 50% de granulés de nourriture artificielle et de 50% de grains gélifiés à base de SAP destinés à apporter une « boisson ».

Composition des granulés de nourriture artificielle :
- 117 g de poudre d'oeuf entier
- 82,5 g de saccharose
- 15 g d'extrait de levure
- 37,5 g de miel
- 345 ml d'eau
- 1,2 g d'acide sorbique
- 35 g de cellulose microcristalline
- 38 g d'huile d'arachide.

Composition des grains gélifiés destinés à la boisson :
- 26 g de saccharose
- 6 g polyacrylate de sodium
- 168 ml d'eau.

La fabrication des granulés de nourriture artificielle est réalisée comme indiqué dans l'exemple 2.

La fabrication des grains gélifiés est réalisée en mélangeant de polyacrylate de sodium la solution sucrée constituée par le reste des ingrédients. Une fois le mélange réalisé, celui-ci est laissé au repos pendant quelques minutes (5 à 10 minutes) puis les grains sont désagglomérés.

Le mélange final est obtenu en mélangeant 50% (en masse) des granulés de nourriture artificielle à 50% (en masse) de grains de polyacrylate de sodium gélifiés.

Le mélange obtenu est directement conditionné dans un récipient fermé.

Le taux d'humidité mesuré par infrarouges sur cette préparation est supérieur à 66 %.

## Revendications

1. Composition pour l'alimentation des insectes d'élevage sous forme de granulés constitués de :
- oeufs et/ou dérivés,
- sucre(s).

2. Composition selon la revendication 1 comprenant en outre un ou plusieurs ingrédient(s) choisis parmi:
- de l'eau ;
- un ou plusieurs agents permettant de polymériser les oeufs et/ou dérivés,;
- un ou plusieurs agents conservateurs;
- un ou plusieurs agents gélifiants ;
- une ou plusieurs molécules de reconnaissance de la nourriture ;
- un ou plusieurs agents susceptibles d'améliorer la formulation; et/ou
- un ou plusieurs agents nutritifs.

3. Composition selon la revendication 1 ou 2 tel que lesdits granulés ont un diamètre moyen compris entre 0,2 mm et 1 cm.

4. Composition selon l'une quelconque des revendications précédentes comprenant :
- de 50% à 95% en poids d'oeufs et/ou dérivés reconstitué ;
- de 5% à 50% de sucre.

5. Composition selon la revendication 4 comprenant en outre :
- de 5 à 20% d'eau ;
- de 0,5% à 10% d'extrait de levure ;
- de 2% à 15% de miel ;
- de 2% à 10% de cellulose ;
- de 0,1% à 1,5% d'agent conservateur ; et
- de 0,1% à 5% d'agent polymérisant.

6. Composition selon l'une quelconque des revendications précédentes telle que elle comprend en outre des granulés comprenant un polymère super absorbant (SAP).

7. Composition selon la revendication 6 telle que les granulés à base de SAP contiennent de 0,5% à 20% en poids de SAP et 80% à 99,5% en poids d'eau.

8. Composition selon la revendication 6 ou 7 telle que les granulés à base d'oeufs et/ou dérivés et les granulés à base de SAP sont administrés de façon simultanée, séquencée ou étalée dans le temps.

9. Composition selon la revendication 6, 7 ou 8 telle que le rapport (granulés à base d'oeufs et/ou dérivés) / (granulés à base de SAP) est compris entre 0,5 et 1,5 (en poids).

10. Procédé de préparation d'une composition selon l'une quelconque des revendications précédentes comprenant les étapes de :
- mélange des différents ingrédients ;
- cuisson du mélange ainsi obtenu ; et
- granulation.

11. Utilisation d'une composition selon l'une quelconque des revendications 1 à 9 pour l'alimentation des insectes d'élevage choisis parmi : les coccinelles *(Coccinellidae),* les syrphes (Diptère, Syrphidae), chrysopes (Névroptère, Chrysopidae), punaises prédatrices (Hémiptères), ou ver à soie (Lépidoptère).
